# EUROPEAN PATENT SPECIFICATION

(11) **EP 0 800 471 B1**
(45) Date of publication and mention of the grant of the patent: **05.01.2000**
(21) Application number: 96934869.7
(22) Date of filing: 31.10.1996
(51) Int. Cl.: B62D 57/032

(54) **LEG MECHANISM**
BEINMECHANISMUS
MECANISME ARTICULE DOTE DE JAMBES

(30) Priority: 06.11.1995 FI 955297
(43) Date of publication of application: 15.10.1997
(73) Proprietor: PLUSTECH OY, 33101 Tampere (FI)
(72) Inventor: PAAKKUNAINEN, Marko, FIN-33710 Tampere (FI)
(74) Representative: Hakola, Unto Tapani
(86) International application number: FI9600583
(87) International publication number: WO9717250

(56) References cited:
- WO-A-92/03328
- DE-A- 4 028 773
- US-A- 4 202 423
- US-A- 4 779 691

## Description

The invention relates to a leg mechanism of the type described in the preamble portion of the appended claim 1.

The purpose of a load-carrying leg mechanism is described particularly in the previous Finnish Patent No. 87171 of the same applicant. The purpose of the leg mechanisms of this kind is on one hand to support a load caused by the body of the device which they are carrying and on the other hand to accomplish advancing movement. Such leg mechanisms having an upper arm and a lower arm are commonly used in conjunction with so-called "walking machines". The model for the movements of such machines is obtained from the legs of mammals where the walking movement causing the advancement is dependent on movement paths of the thigh (upper arm) joined to the body (frame) through the hip joint and the shin (lower arm) joined thereto through the knee joint. These paths are created as a result of pivotal movements taking place with respect to said joints.

When the movement paths of the nature are imitated by machines, high demands are set on actuators moving the above-mentioned parts and on the control operations related thereto. In order to have correct movements of the leg mechanism in view of the movement paths and load situations at every moment, the control and steering systems must be highly sophisticated and functionally reliable to permit the advancing movement and the supporting of the load without any disturbances.

It is the object of the present invention to eliminate the above-mentioned drawbacks and to present a solution related to the mechanism itself, allowing to increase the functional reliability of the leg and to improve the efficiency. For achieving this goal the leg mechanism according to the invention is mainly characterized by what is disclosed in the characterizing portion of the appended claim 1. The basic idea is that the angular change occurring at one joint can be transmitted by means of a particular passive force-transmitting means to a movement of another actuator or joint compensating said angular change for performing the desired path of movement. No active actuator need to be used in conjunction with this latter actuator or joint to bring about the corresponding desired movement, but the movement caused by the angular change takes place automatically.

According to an advantageous alternative disclosed by the claim 3, the passive force-transmitting means transmits the movement of the knee joint to take place as a movement of the hip joint. For example, when the absolute value of the knee joint angle is increased, that is, the lower arm (shin) moves away from a predetermined middle position, the corresponding hip joint angle facing the support surface will be decreased. The support point at the lower end of the lower arm will in this case perform a linear or approximately linear movement, depending on the dimensioning design.

Alternatively, the lower end of the lower arm is made variable in length in such a fashion that when the absolute value of the knee joint angle is increased, the support point at the lower end of the arm will be shifted farther from the rest of the arm during the operation of an actuator acting between the arm and the support point.

As far as other preferred alternatives of the invention are concerned, reference is made to the appended dependent claims and the description to follow.

The invention will be described in the following with reference to the accompanying drawings, wherein
- Fig. 1: is a side view of the leg mechanism according to the invention and the pertaining actuators,
- Fig. 2: is a schematic representation of a slightly modified embodiment compared with the embodiment of Fig. 1,
- Fig. 3: shows one alternative for the construction of the hip joint,
- Fig. 4: shows an alternative for the compensation of the movements,
- Fig. 5: illustrates the alternatives of connecting the leg mechanism to the body, and
- Fig. 6: shows a machine where the leg mechanism according to the invention is applicable.

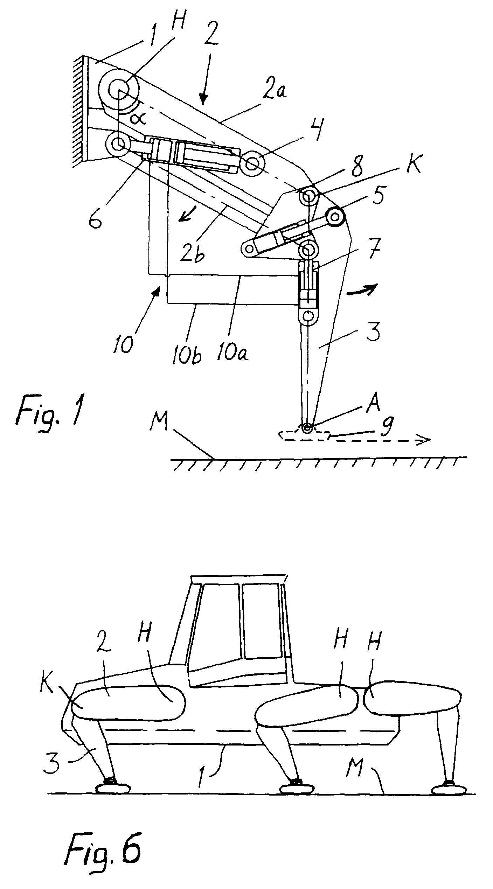

Fig. 1 shows a first embodiment of a leg mechanism according to the invention in side view. The leg mechanism is connected to a body 1 carried thereby. The connection is made through a hip joint H, to which is connected pivotally an upper arm 2 of the mechanism, the arm being pivotable in vertical plane. A lower arm 3 is connected pivotally to the other end of the upper arm 2 through a knee joint K, the arm being pivotable in vertical plane.At the lower end of the lower arm 3 there is a support point A receiving the load caused by the contact with the surface for walking M and having a walk element 9 pivotally connected thereto. The change of an angle α formed between the longitudinal axis of the upper arm 2 and the vertical plane and facing the surface for walking M is effected by means of an active length-variable actuator 4, the first end of which is mounted on the body 1 and the other end on the upper arm 2. Correspondingly, at the knee joint K there is another active length-variable actuator 5, the first end of which is mounted on the upper arm 2 and the second end on the lower arm 3. The change of length of this other actuator causes a change in an angle β facing the surface for walking M and formed between a predetermined zero line, e.g. a vertical line parallel to a line vertical with respect to the machine body 1, and the longitudinal axis of the lower arm. In the position of Fig. 1 this angle β has the value of zero, because the longitudinal axis of the lower arm 3 is coincident with the line serving as the zero line.

The above-described functions caused by the active actuators are known before and they can be accomplished using actuators 4, 5 operated by pressurized medium, such as hydraulic cylinders, connected to a source of pressurized medium and being controllable by valves in a manner known as such.

A passive force-transmitting means 7 is disposed at the knee joint K, the means receiving its driving force from an external load acting on the walk element as well as from the movement of the active actuator 5 located at the same joint K for changing the joint angle β. The means is provided for transmission of the movement to a receiving actuator 6 located at the hip joint H. This will cause in the angle α of the hip joint H a change that compensates the change of the angle β of the knee joint K.

Fig. 1 shows the situation where the leg is off the surface for walking M. If, for instance, the angle β is increased which means that the lower arm 3 (shin) is swinging forward from its middle position where the value of the angle β is zero, the angle α is decreased, that is, the upper arm 2 descends, as illustrated by arrows in the Figure. At a correct transmission of the above-mentioned force, this allows the support point A at the lower end of the lower arm 3 to be moved approximately along a horizontal movement path which is illustrated by a broken line in Fig. 1. In this case a movement of the active actuator 4 of the hip joint H is not needed for accomplishing the corresponding movement, but it can be used separately from the receiving actuator 6 for height adjustment of the entire leg mechanism This way the leg mechanism can be lifted off the surface for walking M by means of the active actuator 4 prior to taking the next step. Further, if it is desired to lift the leg mechanism to a higher position because of an obstacle ahead, the said active actuator 4 of the hip joint H is used, causing the lifting of the upper arm 2 and the lower arm 3 concurrently therewith. The above-described linked movement of the lower arm 3 and the upper arm 2 can be accomplished by means of the actuator 5 of the knee joint K independently of each momentary height position of the upper arm 2, that is, independently of the angle α.

With the leg in contact with the surface for walking M, the operation is the following. In the beginning of the support phase of the step the leg mechanism can be positioned against the ground by means of the active actuator 4 of the hip joint H, whereby the upper arm 2 descends, most preferably when the lower arm 3 is pivoted forward from the vertical line, away from the upper arm 2 to the extent of the angle β. In this event the load of the body 1 carried by the leg mechanism is directed partly to this leg mechanism as the other leg mechanisms of the machine receive simultaneously their share of the load. The knee joint K is turned by means of the actuator 5, causing decrease in the angle β, which depending on the length of the step can attain the value of zero corresponding to the middle position of the lower arm 3, and turn to negative, as a result of which the absolute value of the angle β will increase again. Following the same order, the angle α increases, reaches its maximum when the angle β is zero, and decreases thereafter. In an ideal case the height position of the body 1 carried by the leg mechanism remains the same by virtue of the compensation, in other words, the leg mechanism corresponds functionally to a wheel.

The actuators moving the upper arm 2, the active actuator 4 and the actuator 6 receiving the moving power from the passive force-transmitting means 7 are of a length-variable type, and they are coupled one after the other in such a way that the fixing point of the active actuator 4 on the body 1 is in a sort of way constituted of the end of the receiving actuator 6 next to the cylinder and directed towards the upper arm 2, and the second end of this actuator 6 is attached to the body 1 itself. As the length of the receiving actuator 6 changes, the length of the active actuator 4 does not change automatically, and hence the length change in the entity formed by the actuators turning the upper arm 2 is due solely to the length change of the receiving actuator 6. A corresponding situation, where only one of the actuators causes the total length change, occurs when the upper arm 2 is moved by means of the active actuator 4, because the said actuators can be steered independently of each other and they are coupled one after the other only mechanically. During the simultaneous use of both active actuators 4 and 5, the length change of the combined actuator is due to the joint action of the actuators 4 and 6.

In the practice, the transmission of movement-generating forces from the knee joint K to the hip joint H takes place by means of pressurized medium, e.g. hydraulic oil, using a so-called passive circuit 10. The actuator constituting the force-transmitting passive means 7 is at its first end mounted on the upper arm 2 and at its second end on the lower arm 3. As the angle β of the knee joint K increases from the middle position of the lower arm shown in Fig. 1 with the longitudinal axis of the arm in vertical position with respect to the machine body 1, the pressurized medium is transferred from the actuator chamber around the piston rod to the chamber around the piston rod of the receiving a line 10a of the circuit 10, whereby the receiving actuator 6 is contracted during the extension of the means 7. The opposite sides of the pistons are mutually connected via a return line 10b of the pressurized medium to create a closed circuit. The dimensioning of the pistons and chambers is carried out so as to make the volume changes in the mutually interconnected sides to correspond each other, and in addition so that at a certain value of the angle α the change of the angle β brings about a change of correct magnitude in the angle α. The combination of the actuators 4 and 5 is a so-called tandem cylinder.

In addition to advantageous paths of movement, the invention provides also a braking function. For instance, when the machine stands on the surface for walking M supported by the leg mechanism, the diverting of the lower arm 3 from the middle position shown in Fig. 1 will immediately cause the lowering of the upper arm 2 with respect to the body 1. The same phenomenon takes place when the lower arm 3 is in a position where it is pivoted forward or backward and when the absolute value of the angle β tends to increase. From the point of view of forces, this has effect on the knee joint K in such a manner that the active actuator 5 of the knee can be dimensioned smaller than usual.

Fig. 1 further shows an advantageous mechanism by means of which the upper arm 2 and the lower arm 3 are joined to the body and to each other. The upper arm 2 is formed of a parallelogram linkage mechanism comprising a main arm 2a receiving predominantly the load and constituting one long side of the parallelogram, and also serving as point of attachment for the active actuator 4. The mechanism further comprises an auxiliary arm 2b constituting the second long side of the parallelogram. The main arm and the auxiliary arm are pivotally connected to the body 1, and the parallelogram is completed at the opposite end by a link 8, which pivotally connects the arm ends to each other and contains in this way the shorter side of the parallelogram. The axis of the pivotal joint between the link 8 and the main arm 2a coincides at the same time with the pivotal axis of the knee joint K between the main arm 2a and the lower arm 3.

The link 8 is formed to a plate-like piece, the plane of which is situated substantially in the pivotal plane of the mechanism. The active actuator 5 of the knee joint K is attached to this plate at its one end, and its opposite end is attached to the lower arm 3.

The passive means 7 transmitting the moving power is in turn pivotally connected at its one end to the link 8 and at its other end to the lower arm 3. Further, the pivot axis in the connecting point between the means 7 and the link 8 can be coincident with the pivot axis between the link 8 and the auxiliary arm 2b, as shown in Fig. 1.

The length-variable passive means 7 is further so positioned that it is at its shortest, that is, at its dead centre, when the connecting points thereof coincide with a line between the knee joint K and the support point A at the lower end of the lower arm 3 when this line is in the middle position shown by Fig. 1. In the solution according to Fig. 1 this has been realized in a manner that the point of pivotal connection of the means 7 to the lower arm 3 is disposed on this line, and the point of pivotal connection to the upper arm 2 is situated in the lower point of articulation of the link 8 on the shorter side of the parallelogram. This shorter side is coincident with the line or longitudinal axis of the lower arm 3 in its middle position, where the angle β has the value of zero. In the shortest position of the passive means 7 the receiving actuator 6 is in turn in its longest position. It is self-evident that the longitudinal axis of the lower arm 3 can in its middle position be directed in another way with respect to the shorter side of the parallelogram linkage, and the point of attachement of the passive means 7 to the upper arm 2 can be provided elsewhere than in a point of articulation in the parallelogram linkage. Also in this case it is possible to have such an arrangement that the longitudinal axis of the means 7 will be coincident with the longitudinal axis of the lower arm 3 in certain middle position of the lower arm 3.

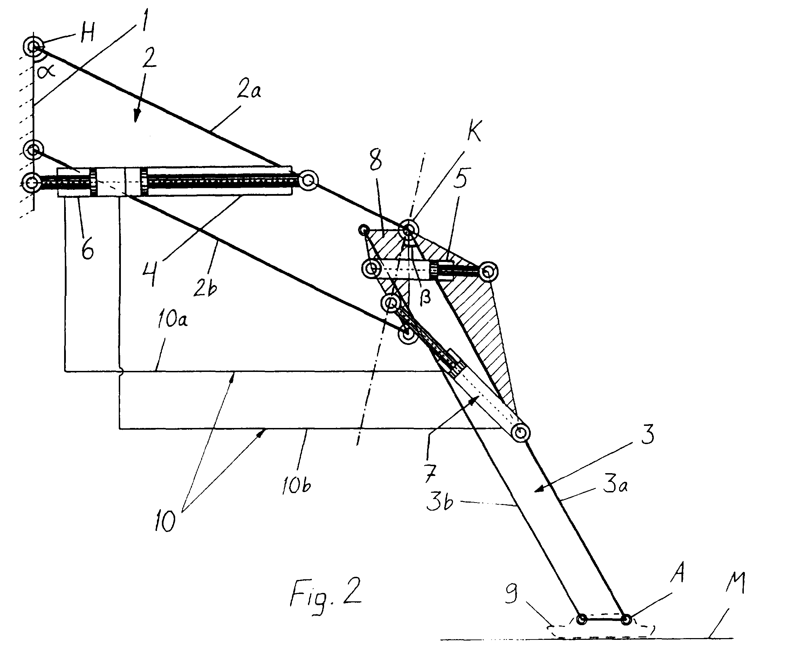

Fig. 2 shows schematically a solution which has a somewhat different mechanism than the embodiment of Fig. 1. The difference of the attachments of the receiving actuator 6 and the active actuator 4 lies therein that while in the embodiment of Fig. 1 the pair of actuators on the side of the body 1 is attached to the point of articulation between the auxiliary arm 2b and the body, in the embodiment of Fig. 2 it is attached to a separate point of articulation on the body. This arrangement does not, however, affect the basic functions of the mechanism. Furthermore, also in the lower arm 3 a parallelogram linkage construction is used, comprising a main arm 3a extending between the knee joint K and the support point A and receiving predominantly the load, and parallelly thereto an auxiliary arm 3b, the upper end of which is pivotally connected to the link 8 and the lower end is pivotally connected to the walk element 9, to which also the support point A is pivotally connected. By virtue of this solution the walk element 9, which can be a piece having the shape of a saucer or other shape lying against the surface for walking M, is maintained in the same direction with respect to the body 1. Further, the passive force-transmitting means 7 is at its end next to the upper arm 2 pivotally connected at a point of its own to the link 8 and at the other end to the arm 3a. In other respects the operation of the mechanism is the same as described above.

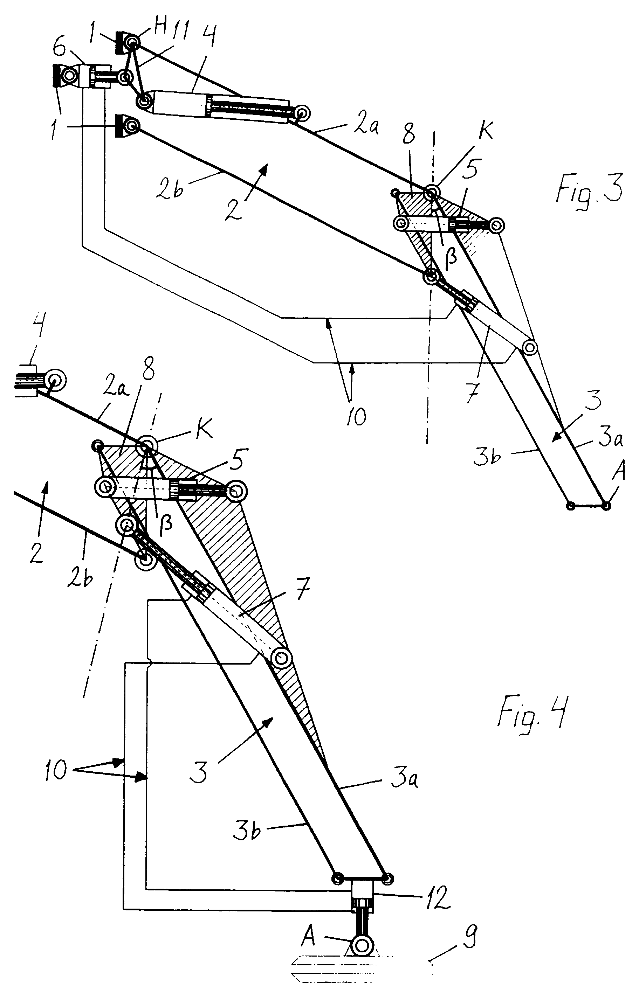

Fig. 3 shows an alternative construction for the hip joint H. The upper arm 2 and the lower arm 3 are constituted of parallelogram linkage constructions as in Fig. 2. The upper arm 2 is pivotally connected to the body 1 at points of articulation which form the shorter side of the parallelogram linkage construction. The active actuator 4 and the receiving actuator 6 are mechanically connected together in such a fashion that the receiving actuator 6 is pivotally connected to the body 1 and at its opposite end it is pivotally connected to a lever arm 11, which is pivotally connected to the body 1, in this case to one of the points of articulation of the parallelogram linkage. The lever arm carries at its opposite end the end of the active actuator 4 facing the body. The solution differs from the tandem cylinder solution shown in Figs. 1 and 2, but in other respects a similar effect can be obtained by using it: the active actuator 4 and the receiving actuator 6 have influence together on the pivoting of the upper arm 2 in such a way that they are capable of acting independently, and their length changes jointly determine the change of the position of the upper arm 2 and the change of the angle α. Further, in the construction according to Fig. 3 the passive actuator of the knee is at its lower end attached in such a fashion that the point of attachment does not lie on the longitudinal axis of the arm 3. This has, however, no effects on the basic functions of the mechanism.

Fig. 4 shows a construction where a compensating function can be achieved in another way than by acting on the hip joint H through the passive force-transmitting means 7 at the knee joint K. In this case all that is needed at the hip joint H is the active actuator 4, the end of which attached to the upper arm 2 is shown in the Figure. The compensating function is achieved by arranging the lower end of the lower arm 3 to be variable in length by fixing a length-variable actuator 12 thereon. As the angle β increases the length change of the passive force-transmitting means 7 will be transmitted to constitute the length change of the receiving actuator 12 compensating the change of position of the lower arm 3 in such a way that the actuator 12 gets longer, and consequently the support point A at its lower end and the walk element 9 are shifted down. As the angle β decreases, the length changes occur in reverse direction. Also in this construction it is possible to define a certain middle position or zero line, where the angle β is zero and the receiving actuator 12 at its shortest, and any deviation of the position of the lower arm 3 to either direction will cause a shift of the support point A at the lower end of the arm to a lower position.

Also in the embodiment of Fig. 4 the forces are transmitted between the knee joint K and the lower end of the lower arm 2 by means of a pressurized medium, for example hydraulic oil, by using the passive circuit 10. The principle is the same as described above with reference to Figs. 1-3.

The lower end of the lower arm 3 is realized structurally by mounting rigidly said receiving actuator 12 on the shorter side of the arm 3 of parallelogram linkage construction, and the lower end of the actuator, in the presented case the piston rod end of the hydraulic cylinder, is pivotally connected to a saucer-like walk element 9 at the point A, which can be regarded as the support point at the lower end of the arm, through which point the forces are transmitted between the surface for walking M and the body 1.

The invention is not limited hereinabove as far as the limits of movement of the leg mechanism are concerned. The leg mechanism has, however, preferably such a construction that the lower arm 3 has a well-defined middle position, which for the above-described compensation movements is also the extreme position, where the angle α of the hip joint H obtained through the compensation is at its largest, or respectively the variable length of the lower end of the lower arm 3 is at its shortest, the angle β being zero. This middle position where the longitudinal axis of the arm 3 is coincident with a predetermined zero line, can be selected in a way which is statically advantageous, for instance it can be a line extending in a certain direction with respect to the machine body 1. This is possible by virtue of the parallelogram construction of the upper arm 2, because the lower arm 3 extending at a certain angle to the upper arm 2 is always at an accurately predetermined angle to the body 1 as well.

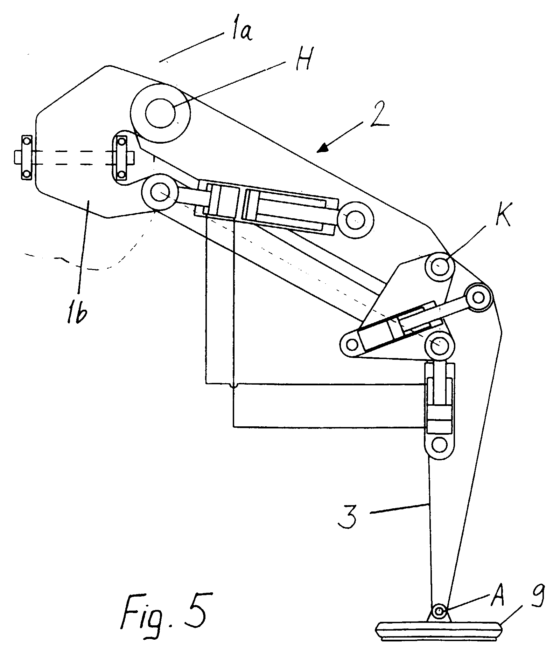

Fig. 5 illustrates how the leg mechanism can be joined at the hip joint H to the body 1 by connecting it pivotally to a auxiliary body 1b which is pivotable with respect to the rest of the body 1a. Hence, the whole leg mechanism can turn within the movement boundaries determined by the joint between the actual body and the auxiliary body 1b.

For the purposes of example, Fig. 6 shows a machine where the leg mechanism according to the invention can be applied. It is concerned with a machine capable of moving in terrain and intended for work in the forest. The machine has six legs articulated to the body, three on each side. The pivoting plane of the leg mechanism extends in the advancing direction in this solution, and said pivoting plane can be pivoted also in another plane, because the hip joint H is mounted on a piece pivotable with respect to the rest of the body, for example on an auxiliary body 1b shown in Fig. 5. The invention can, however, be used in machines of other types, which can have a different number of legs and different ways of articulation on the body.

As far as the leg mechanism itself is concern, the invention is not restricted only to the embodiments shown above, but it can be modified within the inventional idea presented by the claims. For example, it is not necessary that the pair of actuators 4, 6 be coupled mechanically one after the other in the way shown by Figs. 1―3. Nevertheless, if they have their own points of articulation, the possibility of free movement must be provided in the active actuator 4, for example in the case of a hydraulic cylinder a free circulation between the chambers on the opposite sides of the piston, because it also will move during the operation of the receiving actuator 6.

The leg mechanism can be realized structurally also in such a way that the actuators are located inside the arms 2 and 3. For example the representation of Fig. 1 can be understood as a side view, where the actuators are outside the arms, but also as a sectional view taken along the middle vertical plane of the arm, in which case the pivoting arms are constituted of pairs of parallel subarms, inside which the actuators are articulated between the subarms.

The invention can, with appropriate changes, be used also in conjunction with a leg mechanism containing force couples of active actuators, described in the earlier patent no. 87171 of the applicant.

## Claims

1. Leg mechanism comprising an upper arm (2) pivotally connected to a body (1) or the like by means of a hip joint (H), said body (1) being movable by means of said leg mechanism, and a lower arm (3) pivotally connected to the opposite end of the upper arm by means of a knee joint (K), the lower end of the lower arm comprising a walk element (9) supported by the surface for moving (M), whereby between the upper arm (2) and the body (1) at the hip joint (H), and respectively between the upper arm (2) and the lower arm (3) at the knee joint (K), there is an actuator (4, 5) for effecting the pivotal movement of the corresponding joint, **characterized** in that at one of the joints (K, H) there is, in addition to an active actuator, also a passive force-transmitting means (7) arranged to transmit a change in the pivoting angle (α, β) taking place at the joint under the effect of the active actuator and an external load, through a receiving actuator (6, 12) to take the form of a change in the position of the lower end of the lower arm (3) for compensating said change in the angle.

2. Leg mechanism according to claim 1, **characterized** in that the passive force-transmitting means (7) is situated at the knee joint (K) and provided for transmission of the pivotal movement caused by the active actuator (5) located at this joint to take the form of a change in the position of the lower end of the lower arm (3) compensating the change in the angle caused by said pivotal movement.

3. Leg mechanism according to claim 2, **characterized** in that the receiving actuator (6) is located at the hip joint (H) and is arranged to effect a change in the pivoting angle (α) of the upper arm (2).

4. Leg mechanism according to claim 2, **characterized** in that the receiving actuator (12) is situated at the lower end of the lower arm (3) and is arranged to effect a change in the length of the lower arm (3).

5. Leg mechanism according to any of the preceding claims, **characterized** in that the passive force-transmitting means (7) and the receiving actuator (6, 12) are of a length-variable type.

6. Leg mechanism according to claim 3 and 5, **characterized** in that in addition to the receiving actuator (6) receiving the movement from the passive force-transmitting means (7), the active actuator (4) acting at the hip joint (H) is of a length-variable type, and said actuators are connected one after the other in such a way that the overall change of their lengths determines the corresponding angle change in the joint.

7. Leg mechanism according to claim 5 or 6, **characterized** in that the active actuators (4, 5), the passive force-transmitting means (7) as well as the receiving actuator (6, 12) are realized in the form of cylinders operated by pressurized medium.

8. Leg mechanism according to any of the preceding claims, **characterized** in that the upper arm (2) is realized in the form of a parallelogram mechanism.

9. Leg mechanism according to claim 8, **characterized** in that in the upper arm (2) at the end next to the knee joint (K) there is a link (8) forming a part of the parallelogram mechanism and serving as an attachment for one end of the active actuator (5) located at the knee joint (K), the other end of said actuator being attached to the lower arm (3).

10. Leg mechanism according to claim 9, **characterized** in that the passive force-transmitting means (7) is at its one end attached to said link (8) of the parallelogram mechanism, its other end being attached to the lower arm (3).

11. Leg mechanism according to any of the claims 8―10, **characterized** in that also the lower arm (3) is realized in the form of a parallelogram mechanism.

12. Leg mechanism according to claim 4 and 11, **characterized** in that the actuator (12) located at the lower end of the lower arm (3) is mounted on the shorter side of the parallelogram mechanism.

## Patentansprüche

1. Beinmechanismus mit einem Oberarm (2), der dreh- bzw. schwenkbar mit einem Körper (1) oder dergleichen mittels eines Hüftgelenkes (H) verbunden ist, wobei der Körper (1) mittels des Beinmechanismus bewegbar ist, und einem Unterarm (3), der dreh- bzw. schwenkbar mit dem entgegengesetzten Ende des Oberarms mittels eines Kniegelenkes (K) verbunden ist, wobei das untere Ende des Unterarms ein Gehelement (9) aufweist, das von der zu begehenden Oberfläche tragbar ist (M), wobei zwischen dem Oberarm und dem Körper (1) an dem Hüftgelenk (H), und jeweils zwischem dem Oberarm (2) und dem Unterarm (3) an dem Kniegelenk (K) eine Betätigungseinrichtung (4,5) zum Bewirken der Dreh- bzw. Schwenkbewegung des jeweiligen Gelenkes vorgesehen ist, **dadurch gekennzeichnet, daß** an einem der Gelenke (K, H) zusätzlich zu einer aktiven Betätigungseinrichtung auch eine passive, kraftübertragende Einrichtung (7) angeordnet ist, um eine Änderung des Drehwinkels (α, β), die an dem Gelenk unter der Wirkung der aktiven Betätigungseinrichtung und einer externen Last stattfindet, über eine Aufnahmebetätigungseinrichtung (6,12) zu übertragen, um die Form einer Änderung der Position des unteren Endes des Unterarmes (3) anzunehmen, um die Änderung des Winkels zu kompensieren.

2. Beinmechanismus nach Anspruch 1, **dadurch gekennzeichnet, daß** die passive kraftübertragende Einrichtung (7) an dem Kniegelenk (K) angeordnet ist und zur Übertragung der Drehbewegung vorgesehen ist, die durch die an diesem Gelenk angeordnete aktive Betätigungseinrichtung (5) hervorgerufen wird, um die Form einer Änderung der Position des unteren Endes des Unterarmes (3) anzunehmen, um die Drehbewegung hervorgerufene Änderung des Winkels zu kompensieren.

3. Beinmechanismus nach Anspruch 2, **dadurch gekennzeichnet, daß** die Aufnahmebetätigungseinrichtung (6) an dem Hüftgelenk (H) angeordnet ist und dafür vorgesehen ist, eine Änderung in dem Drehwinkel (α) des Oberarmes (2) zu bewirken.

4. Beinmechanismus nach Anspruch 2, **dadurch gekennzeichnet, daß** die Aufnahmebetätigungseinrichtung (12) an dem unteren Ende des unteren Armes (3) angeordnet ist und dafür vorgesehen ist, eine Änderung in der Länge des Unterarmes (3) zu bewirken.

5. Beinmechanismus nach einem der vorhergehenden Ansprüche, **dadurch gekennzeichnet, daß** die passive kraftübertragende Einrichtung (7) und die Aufnahmebetätigungseinrichtung (6,12) von einem längenvariablen Typ sind.

6. Beinmechanismus nach Anspruch 3 und 5, **dadurch gekennzeichnet, daß** zusätzlich zu der Aufnahmebetätigungseinrichtung (6), die die Bewegung von der passiven kraftübertragenden Einrichtung (7) aufnimmt, die aktive Betätigungseinrichtung (4), die auf das Hüftgelenk (H) wirkt, von einem längenvariablen Typ ist, und die Betätigungseinrichtungen hintereinander derartig angeschlossen sind, daß die Gesamtänderung ihrer Längen die entsprechende Winkeländerung in dem Gelenk bestimmt.

7. Beinmechanismus nach Anspruch 5 oder 6, **dadurch gekennzeichnet, daß** die aktiven Betätigungseinrichtungen (4,5), die passive kraftübertragende Einrichtung (7) sowie die Aufnahmebetätigungseinrichtung (6,12) in Form von mittels eines Druckmediums betriebenen Zylindern ausgebildet sind.

8. Beinmechanismus nach einem der vorhergehenden Ansprüche, **dadurch gekennzeichnet, daß** der Oberarm (2) in der Form eines Parallelogrammechanismus realisiert ist.

9. Beinmechanismus nach Anspruch 8, **dadurch gekennzeichnet, daß** in dem Oberarm (2) an dem Ende, das dem Kniegelenk (K) am nächsten liegt, ein Verbindungsglied (8) angeordnet ist, das einen Teil des Parallelogrammechanismus bildet und als eine Befestigung für ein Ende der an dem Kniegelenk (K) angeordneten aktiven Betätigungseinrichtung (5) dient, wobei das andere Ende der Betätigungseinrichtung an dem Unterarm (3) angebracht ist.

10. Beinmechanismus nach Anspruch 9, **dadurch gekennzeichnet, daß** die passive kraftübertragende Einrichtung (7) an ihrem ein Ende an dem Verbindungsglied (8) des Parallelogrammechanismus angebracht ist, wobei das andere Ende an dem Unterarm (3) angebracht ist.

11. Beinmechanismus nach einem der Ansprüche 8 bis 10, **dadurch gekennzeichnet, daß** auch der Unterarm (3) in der Form eines Parallelogrammechanismus realisiert ist.

12. Beinmechanismus nach Anspruch 4 und 11, **dadurch gekennzeichnet, daß** die an dem unteren Ende des Unterarmes (3) angeordnete Betätigungseinrichtung (12) an der kürzeren Seite des Parallelogrammechanismus angebracht ist.

## Revendications

1. Mécanisme à patte comprenant un bras supérieur (2) raccordé de manière pivotante à un corps (1) ou analogue par une articulation (H) de hanche, le corps (1) étant mobile sous la commande du mécanisme à patte, et un bras inférieur (3) raccordé de manière pivotante à l'extrémité opposée du bras supérieur par une articulation (K) de genou, l'extrémité inférieure du bras inférieur comprenant un élément de marche (9) supporté par la surface de déplacement (M), dans lequel, entre le bras supérieur (2) et le corps (1) au niveau de l'articulation de la hanche (H) et, respectivement, entre le bras supérieur (2) et le bras inférieur (3) au niveau de l'articulation du genou (K), est disposé un organe de manoeuvre (4, 5) destiné à assurer le mouvement de pivotement de l'articulation correspondante, caractérisé en ce que, à l'une des articulations (K, H), est disposé, en plus de l'organe actif de manoeuvre, un dispositif passif (7) de transmission de force aussi disposé afin qu'il transmette un changement de l'angle de pivotement (α, β) réalisé au niveau de l'articulation sous l'effet de l'organe actif de manoeuvre et d'une charge externe, par l'intermédiaire d'un organe récepteur de manoeuvre (6, 12), afin qu'il prenne la forme d'un changement de position de l'extrémité inférieure du bras inférieur (3) assurant la compensation du changement de l'angle.

2. Mécanisme à patte selon la revendication 1, caractérisé en ce que le dispositif passif (7) de transmission de force est placé à l'articulation (K) du genou et est destiné à transmettre le mouvement de pivotement provoqué par l'organe actif (5) de manoeuvre placé à cette articulation sous forme d'un changement de position de l'extrémité inférieure du bras inférieur (3) compensant le changement d'angle provoqué par le mouvement de pivotement.

3. Mécanisme à patte selon la revendication 2, caractérisé en ce que l'organe récepteur de manoeuvre (6) se trouve à l'articulation de la hanche (H) et est destiné à provoquer un changement d'angle de pivotement (α) du bras supérieur (2).

4. Mécanisme à patte selon la revendication 2, caractérisé en ce que l'organe récepteur de manoeuvre (12) est placé à l'extrémité inférieure du bras inférieur (3) et est destiné à provoquer un changement de longueur du bras inférieur (3).

5. Mécanisme à patte selon l'une quelconque des revendications précédentes, caractérisé en ce que le dispositif passif (7) de transmission de force et l'organe récepteur de manoeuvre (6, 12) sont de type à longueur variable.

6. Mécanisme à patte selon les revendications 3 et 5, caractérisé en ce que, en plus de l'organe récepteur de manoeuvre (6) qui reçoit le déplacement du dispositif passif (7) de transmission de force, l'organe actif de manoeuvre (4) agissant sur l'articulation de la hanche (H) est du type à longueur variable, et les organes de manoeuvre sont raccordés l'un derrière l'autre de manière que le changement global de leurs longueurs détermine le changement correspondant d'angle de l'articulation.

7. Mécanisme à patte selon la revendication 5 ou 6, caractérisé en ce que les organes actifs de manoeuvre (4, 5), le dispositif passif (7) de transmission de force ainsi que l'organe récepteur de manoeuvre (6, 12) sont réalisés sous forme de vérins commandés par un fluide sous pression.

8. Mécanisme à patte selon l'une quelconque des revendications précédentes, caractérisé en ce que le bras supérieur (2) est réalisé sous forme d'un mécanisme en parallélogramme.

9. Mécanisme à patte selon la revendication 8, caractérisé en ce que, dans le bras supérieur (2) à l'extrémité proche de l'articulation du genou (K), une bielle (8) est disposée, fait partie d'un mécanisme en parallélogramme et est utilisée connue fixation d'une première extrémité de l'organe actif de manoeuvre (5) placée à l'articulation du genou (K), l'autre extrémité de l'organe de manoeuvre étant fixée au bras inférieur (3).

10. Mécanisme à patte selon la revendication 9, caractérisé en ce que le dispositif passif (7) de transmission de force, à sa première extrémité, est fixé à la bielle (8) du mécanisme en parallélogramme, son autre extrémité étant fixée au bras inférieur (3).

11. Mécanisme à patte selon l'une quelconque des revendications 8 à 10, caractérisé en ce que le bras inférieur (3) est aussi réalisé sous forme d'un mécanisme en parallélogramme.

12. Mécanisme à patte selon les revendications 4 et 11, caractérisé en ce que l'organe de manoeuvre (12) placé à l'extrémité inférieure du bras inférieur (3) est monté sur Le petit côté du mécanisme cri parallélogramme.
